(19) Europäisches Patentamt
European Patent Office
Office européen des brevets

(11) EP 2 226 970 A1

(12) DEMANDE DE BREVET EUROPEEN

(43) Date de publication:
08.09.2010 Bulletin 2010/36

(51) Int Cl.:
H04L 12/24 (2006.01)    H04L 12/56 (2006.01)

(21) Numéro de dépôt: 09180291.8

(22) Date de dépôt: 22.12.2009

(84) Etats contractants désignés:
AT BE BG CH CY CZ DE DK EE ES FI FR GB GR
HR HU IE IS IT LI LT LU LV MC MK MT NL NO PL
PT RO SE SI SK SM TR
Etats d'extension désignés:
AL BA RS

(30) Priorité: 05.03.2009 FR 0951394

(71) Demandeur: Alcatel Lucent
75008 Paris (FR)

(72) Inventeurs:
• Pouyllau, Helia
91620, NOZAY (FR)
• Carofiglio, Giovanna
91620, NOZAY (FR)

(74) Mandataire: Thibaud, Jean-Baptiste
Alcatel Lucent
Intellectual Property & Standards
54 rue La Boétie
75008 Paris (FR)

(54) **Procédé dans un environnement de réseaux interconnectés de communication, de sélection d'une chaîne de contrats de service**

(57) Procédé, dans un environnement de réseaux interconectés d'opérateurs (1-4) de communication, de sélection et de négociation, en réponse à une requête de service entre une ou plusieurs sources (i11) et une ou plusieurs destinations (e31) selon des spécifications de qualité de service, d'une chaîne de contrats de service (SEjk) successifs et continus, établis chacun avec un opérateur (1-4), de manière à relier la ou lesdites sources (i11) avec la ou lesdites destination (e31) par une liaison de service garantissant lesdites spécifications utilisant une technique d'optimisation globale du revenu des opérateurs de type apprentissage par renforcement ou Q-learning.

FIG. 2

EP 2 226 970 A1

**Description**

La présente invention concerne un procédé, dans un contexte de réseaux interconnectés, de sélection et de négociation, en réponse à une requête de service avec garantie de qualité entre une ou plusieurs sources et une ou plusieurs destinations appartenant à des réseaux distincts, d'une chaîne de contrats établis entre les opérateurs des réseaux reliant la ou lesdites sources avec la ou lesdites destinations.

Les services de communication multimédia critiques en termes de qualité de service (QdS) de type vidéo conférence deviennent de plus en plus courants. Ils traversent des réseaux d'opérateurs offrant des services de connexion entre les équipements d'interconnexion situés à leurs frontières. Ces réseaux d'opérateurs sont généralement indépendants les uns des autres, et administrés de manière concurrentielle, les opérateurs se refusant à divulguer la topologie et l'état des ressources de leurs réseaux.

Les réseaux d'opérateurs sont cependant interconnectés afin de proposer des services de réseau complémentaires et permettre ainsi de couvrir de plus vastes zones géographiques.

Un service est réservé auprès d'un opérateur au moyen d'un contrat de service (encore dénommé Service Level Agreement, SLA, ou Service Element, SE, en anglais). Un tel contrat est une instance d'un contrat de qualité de service (Quality of Service, QoS, ou Service Level Spécification, SLS, en anglais) et reste confidentiel entre les deux parties signataires. Le contrat de qualité de service précise les paramètres techniques du service à savoir, le point d'entrée et le point de sortie dans le réseau du fournisseur de service, la date et la durée de réservation, le débit ou la bande passante, le délai maximum autorisé, la gigue ou variation de la phase (jitter en anglais), le taux de perte de paquet autorisé, etc. ainsi que les paramètres de gestion à savoir le prix du service, ou encore les pénalités et leur mode d'application en cas de non respect des spécifications techniques.

Chaque opérateur exploite son réseau afin de vendre ses services de communication en maximisant ses revenus.

Un utilisateur final, ou un tiers médiateur, fournisseur de service inter opérateurs, qui souhaite établir une liaison entre une ou plusieurs sources et une ou plusieurs destinations est amené à utiliser successivement, en les combinant, les services de plusieurs opérateurs. Pour cela il doit négocier et contracter indépendamment avec chacun des opérateurs traversés. Il doit ensuite assurer la cohérence des différents contrats afin de respecter les spécifications de qualité de service de l'utilisateur final pour la liaison de bout-en-bout.

Aujourd'hui, il n'existe pas de système autre que manuel pour négocier une chaîne de tels contrats de service successifs et continus afin de réaliser une liaison entre une ou plusieurs sources et une ou plusieurs destinations en respectant les spécifications de qualité de service.

La présente invention concerne un mécanisme de sélection et négociation, au niveau inter opérateurs, de telles chaînes de contrats de service.

Il est connu afin de composer une chaîne de contrat les algorithmes décrits par :

- N. Djarallah and H. Pouyllau, Algorithms for SLA Composition to Provide Inter-Domain Services, accepted for IEEE International Symposium on Integrated Network Management (IM), 2009; et
- Howarth, M. P.; Boucadair, M.; Flegkas, P.; Wang, N.; Pavlou, G.; Morand, P.; Coadic, T.; Griffin, D.; Asgari, A. & Georgatsos, P. End-to-end quality of service provisioning through inter-provider traffic engineering. Computer Communications, 2006, 29, 683-702.

L'invention a pour objet un procédé, dans un environnement de réseaux interconnectés d'opérateurs, de sélection et de négociation, en réponse à une requête de service entre une ou plusieurs sources et une ou plusieurs destinations selon des spécifications de qualité de service, d'une chaîne de contrats successifs et continus, établis chacun avec un opérateur, de manière à relier la ou lesdites sources avec la ou lesdites destinations par une liaison garantissant lesdites spécifications, en utilisant une technique d'optimisation globale du revenu des opérateurs.

Selon une autre caractéristique de l'invention ladite technique d'optimisation utilise un module de type apprentissage par renforcement ou Q-learning.

Selon une autre caractéristique de l'invention ledit module comprend les étapes suivantes :

- initialisation d'une fonction d'évaluation $Q^{\pi}$, fonction réelle d'une variable s décrivant l'ensemble S des états de l'environnement inter-opérateur et d'une variable a décrivant l'ensemble A des actions de changement d'état possibles,
- itération à chaque réception d'une requête r de service des étapes suivantes :

  - depuis un état initial $s_i$,
  - choix d'une action $a_0$, dans l'ensemble $A_r$ des actions satisfaisant aux contraintes de ladite requête r de service, fonction de la fonction d'évaluation $Q^{\pi}$, soit pour laquelle

$$Q^{\pi}(s_i, a_0) = \underset{a_k \in A_r}{F^{\pi}}\left(Q^{\pi}(s_i, a_k)\right),$$

où $F^{\pi}$ est une fonction réelle,

- application de ladite action $a_0$,
- détermination d'un revenu p associé à ladite action $a_0$ et à l'état initial si,
- détermination d'un état final $s_f$ résultant de l'application de ladite action $a_0$,
- réévaluation de la fonction $Q^{\pi}$ pour l'état initial $s_i$ et l'action déterminée $a_0$, selon la formule d'apprentissage:

$$Q^{\pi}(s_i, a_0) := Q^{\pi}(s_i, a_0) + \alpha\left[ p + \gamma \max_{a_k \in A(s_f)}\left(Q^{\pi}(s_f, a_k)\right) - Q^{\pi}(s_i, a_0)\right],$$

où
$\alpha$ est un taux de changement,
$\gamma$ est un taux d'actualisation,
$A(s_f)$ est l'ensemble des actions $a_k$ possibles dans l'état final $s_f$,
- remplacement de l'état initial si par l'état final $s_f$, $s_i:=s_f$.

Selon une autre caractéristique de l'invention la fonction $F^{\pi}$ est la fonction max.

Selon une caractéristique alternative de l'invention la fonction $F^{\pi}$ est une fonction d'exploration stochastique selon la politique $\pi$, ladite politique étant choisie parmi : $\varepsilon$-greedy, softmax, boltzmann ou tout autre politique possible.

Selon une autre caractéristique de l'invention l'initialisation comprend la mise à zéro de toutes les valeurs de la fonction $Q^{\pi}$ d'évaluation.

Selon une caractéristique alternative de l'invention, l'initialisation comprend encore la mise à une valeur initiale non nulle de la fonction $Q^{\pi}$ d'évaluation pour certains couples (s,a) préférentiels ou à éviter.

Selon une autre caractéristique de l'invention, un état s de l'ensemble S est un ensemble de chaînes de contrats de service successifs et continus.

Selon une autre caractéristique de l'invention une action a de l'ensemble A est une sélection d'une chaîne de contrats de service successifs et continus.

Selon une autre caractéristique de l'invention le revenu p d'une action a dans un état s est déterminé par le revenu apporté par l'allocation de la chaîne de contrats de service associée à ladite action a depuis l'état s.

Selon une autre caractéristique de l'invention le taux de changement $\alpha$ est dégressif jusqu'à zéro depuis une valeur initiale comprise entre 0 et 1.

Selon une autre caractéristique de l'invention la valeur initiale du taux de changement $\alpha$ est égale à 0,5.

Selon une autre caractéristique de l'invention un taux de changement $\alpha$ est associé indépendamment à chaque paire (s, a) .

Selon une autre caractéristique de l'invention le taux d'actualisation $\gamma$ est compris entre 0 et 1.

Selon une autre caractéristique de l'invention le taux d'actualisation $\gamma$ est égal à 0,8.

D'autres caractéristiques, détails et avantages de l'invention ressortiront plus clairement de la description détaillée d'un mode de réalisation donnée ci-après à titre indicatif en relation avec des dessins sur lesquels :

- la figure 1 présente un exemple de réseaux interconnectés d'opérateurs ,
- la figure 2 présente un environnement illustratif comprenant quatre réseaux d'opérateurs,
- la figure 3 présente un diagramme de connexion possible dans l'environnement illustratif,
- la figure 4 liste les chaînes de contrats correspondantes dans l'environnement illustratif,
- la figure 5 est un tableau représentant un exemple de fonction d'évaluation à l'état $s_i$,
- la figure 6 est un tableau représentant le même exemple de fonction d'évaluation à l'état $s_f$,
- la figure 7 est un diagramme comparatif des performances de différentes méthodes de composition d'une chaîne de contrats.

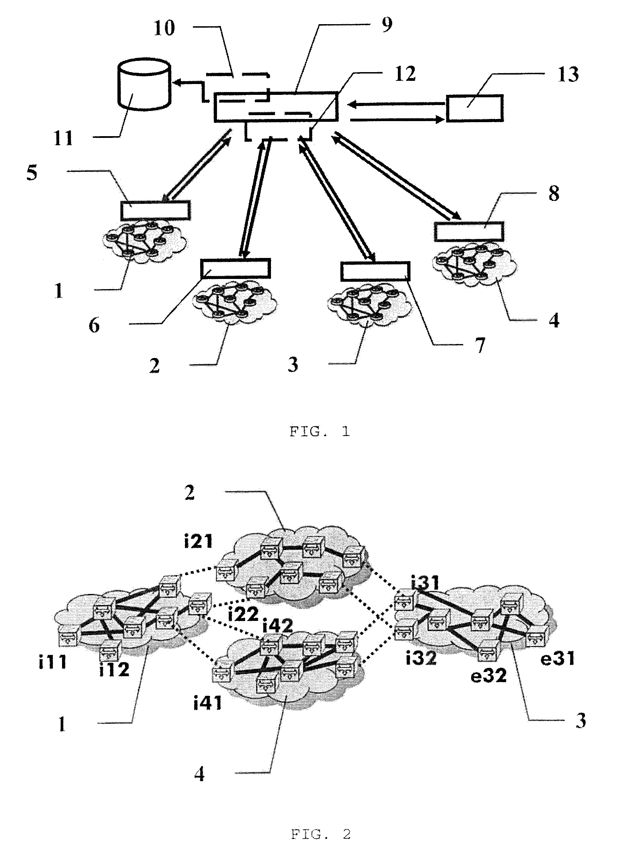

La figure 1 présente un exemple d'environnement de réseaux interconnectés d'opérateurs. Y sont représentés quatre réseaux d'opérateurs 1-4. Un programme tiers 9 assure l'interface entre ces opérateurs 1-4, par un dialogue via leur couche d'interface 5-8 respective. Le programme tiers 9 récupère des informations sur les possibilités de service de chacun des opérateurs 1-4, essentiellement sous la forme des contrats de service proposés et les stocke dans une base de données 11. L'action du programme tiers 9 vise à construire une chaîne de contrats de service en optimisant les revenus globaux des opérateurs 1-4. Pour cela il utilise un module de négociation 12 en charge de la négociation des contrats avec chaque opérateur et de leur cohérence en termes de caractéristiques et un module de composition 10 des différents contrats négociés pour les assembler en une chaîne optimale. La chaîne ainsi construite peut ensuite être proposée à un client 13. Le module de composition 10 met en oeuvre un procédé qui va être décrit ci-dessous.

Afin d'illustrer notre propos, nous allons suivre tout au long de la présente description, un même exemple volontairement simplifié. En se référant à la figure 2, l'environnement comprend quatre opérateurs et leurs réseaux 1-4. Ces opérateurs 1-4 sont interconnectés et il convient de négocier le meilleur chemin afin de les traverser. Le réseau opérateur j (j=1..4) est composé de routeurs. La topologie interne du réseau de l'opérateur n'est pas connue. Seuls les routeurs situés aux frontières et interconnectés avec ceux d'un autre réseau d'opérateur sont visibles et intéressants. Certains de ces routeurs frontières sont repérés $i_{jk}$ ou $e_{jk}$ où j est le numéro identifiant l'opérateur et k un numéro d'ordre. « i » désigne un routeur d'entrée (ingress en anglais) et « e » un routeur de sortie (egress en anglais). Ainsi i21 est un routeur d'entrée et est le premier routeur de l'opérateur 2. En poursuivant notre exemple, il est souhaité d'établir une liaison entre le routeur source i11 et le routeur destination e31.

La figure 2 illustre, pour ce même exemple, le diagramme des offres de contrats possibles. Les contrats sont repérés $SE_{jk}$ où j est le numéro identifiant l'opérateur proposant le contrat et k un numéro d'ordre du contrat. Ainsi pour relier i11 et i21, l'opérateur 1 propose deux contrats avec des caractéristiques différentes: un premier contrat SE11 avec une bande passante (notée bw) de 1Gbit/s pour un revenu de 30 et un second contrat SE12 avec une bande passante bw de 500Mbit/s pour un revenu de 10. En fonction des caractéristiques, notamment de bande passante requise, de la liaison complète i11-e31, il apparaît que plusieurs choix de chaîne de contrats sont possibles. Toutes les possibilités ne sont pas nécessairement présentes : par exemple, aucun contrat n'est proposé pour relier i42 et i32.

Lorsque l'on combine deux contrats SE successifs pour créer une liaison, la bande passante bw résultante est égale au minimum des bandes passantes bw des deux contrats, le revenu p résultant est égal à la somme des revenus p des contrats de service.

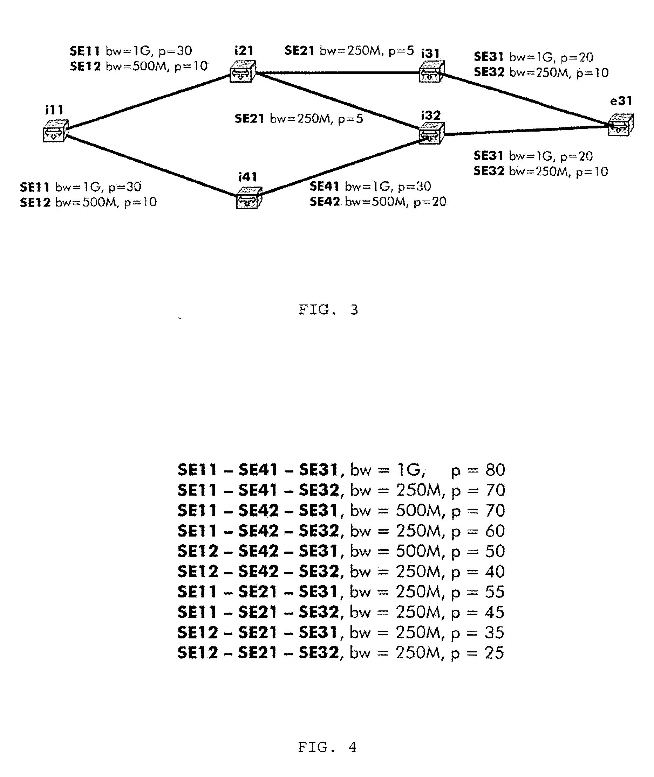

Le tableau de la figure 3 représente dix chaînes possibles, avec leur caractéristiques de bande passante bw et de revenu p, pour relier i11 et e31, avec une bande passante de 250M.

Le problème qui se pose est de déterminer la "meilleure" chaîne. Si la chaîne permettant d'obtenir le revenu maximal est utilisée alors on parle d' « optimisation locale ». La sélection à un moment donné de la chaîne de revenu maximal peut interdire sa sélection à l'avenir pour des requêtes plus exigeantes. Une optimisation globale de l'utilisation des réseaux des opérateurs 1-4 est fortement souhaitable afin de garantir une meilleure utilisation des ressources et ainsi globalement (pour un instant donné et aussi pour l'avenir) un meilleur revenu.

A noter que l'on peut indifféremment considérer le revenu, l'utilisation, la disponibilité et tenter de le maximiser ou le coût de fonctionnement, le prix de revient et l'on tentera alors de le minimiser. Le revenu peut représenter différents concepts : il peut s'agir d'un prix, d'un bénéfice, d'un indice de préférence, d'un taux d'utilisation ou encore d'un coût (auquel cas afin de minimiser les coûts ces derniers seront valués négativement et maximisés), etc. Quelque soit la représentation du revenu, celle-ci doit être la même entre les opérateurs concernés par une requête de service d'interconnexion.

La difficulté pour optimiser globalement, est que les requêtes d'établissement de liaison, qu'il s'agisse de liaisons point à point, point-multipoint ou multipoint-multipoint, arrivent en temps réel. A chaque instant, en plus de l'état de l'environnement, seules les caractéristiques de la requête en cours sont connues. Il serait donc naturel de réaliser une optimisation locale optimisant uniquement le traitement de ladite requête. Une autre approche évidente consiste à stocker un nombre n de requêtes avant traitement afin de réaliser une optimisation semi-globale sur ces n requêtes. Cette solution améliore le revenu mais n'est pas satisfaisante en ce que l'amélioration reste limitée et qu'elle retarede les requêtes arrivées les plus tôt.

Le procédé mis en oeuvre par le module 10 utilise une technique d'optimisation globale du revenu de service.

Selon un mode de réalisation particulier cette technique d'optimisation utilise un module de type apprentissage par renforcement ou Q-learning.

Le principe d'apprentissage par renforcement encore nommé Q-learning est connu. Il est cependant nécessaire de l'adapter au problème particulier de la sélection d'une chaîne de contrats.

Le principe de l'apprentissage consiste à utiliser ce que l'on connaît à l'instant t, à savoir l'état s de l'environnement, ainsi que les actions a possibles pour modifier cet état. A partir de ces informations une fonction d'évaluation $Q^{\pi}$ est construite qui fournit, pour tout couple (s,a), une valeur numérique indicative de la pertinence de l'action a à partir de l'état s.

Une telle fonction est réévaluée en fonction des résultats obtenus et il est ainsi possible de capitaliser une expérience acquise par la pratique.

Au départ la fonction $Q^{\pi}$ est initialisée avec des valeurs quelconques, en l'absence de retour d'expérience. Puis à chaque application d'une action a un nouvel état est obtenu. En fonction d'un revenu p obtenu comme résultat on recalcule la fonction au point (s,a) et on cumule ainsi l'expérience en réalisant un apprentissage. L'accumulation d'expérience peut être réalisée ou poursuivie in situ, durant l'exploitation. Cependant afin de hâter la convergence de l'apprentissage, il peut être intéressant de procéder, avant utilisation, à des itérations à partir de données/requêtes r de simulation indicatives, afin d'explorer l'espace des solutions. Ceci permet efficacement de "peupler" la fonction d'évaluation $Q^\pi$. Un grand nombre d'itération permet de repasser utilement plusieurs fois sur chacun des couples (s,a), où s décrit l'ensemble S des états de l'environnement de communication et a décrit l'ensemble A des actions de changement d'état possibles.

Après un certain nombre d'itérations, ou lorsqu'une certaine stabilité de la fonction $Q^\pi$ est atteinte, les valeurs de $Q^\pi$ n'évoluant plus ou très peu, il est même possible de ne plus procéder au calcul de réévaluation.

Une fois "peuplée", cette fonction $Q^\pi$ permet de choisir pour un état donné s, l'action $a_0$ optimale en fonction des valeurs $Q^\pi(s,a)$. Ainsi, le choix de l'action $a_0$ à réaliser dans un état s est déterminé en fonction des valeurs de la fonction $Q^\pi$, via une politique $\pi$ .

Chaque itération comporte les étapes suivantes :

- réception d'une requête r de service, une requête r comportant la ou les sources, la ou les destinations, ainsi que les caractéristiques techniques (bande passante, délai, ... et ou administratives de la liaison à établir,
- détermination de l'état courant de l'environnement, pris comme état initial $s_i$,
- choix d'une action $a_0$, dans l'ensemble $A_r$ des actions satisfaisant aux contraintes de ladite requête r de service, maximisant la fonction d'évaluation $Q^\pi$, soit pour laquelle:

$$Q^\pi(s_i,a_0) = \underset{a_k \in A_r}{F^\pi}\left(Q^\pi(s_i,a_k)\right),$$

où $F^\pi$ est une fonction réelle,

- application de ladite action $a_0$,
- détermination d'un revenu p associé à ladite action $a_0$ et à l'état initial $s_i$,
- détermination d'un état final $s_f$ résultant de l'application de ladite action $a_0$,
- réévaluation de la fonction $Q^\pi$ pour l'état initial $s_i$ et l'action déterminée $a_0$, selon la formule d'apprentissage :

$$Q^\pi(s_i,a_0) := Q^\pi(s_i,a_0) + \alpha\left[ p + \gamma \max_{a_k \in A(s_f)}\left(Q^\pi(s_f,a_k)\right) - Q^\pi(s_i,a_0) \right],$$

où
$\alpha$ est un taux de changement,
$\gamma$ est un taux d'actualisation,
$A(s_f)$ est l'ensemble des actions $a_k$ possibles dans l'état final $s_f$,

- remplacement de l'état initial $s_i$ par l'état final $s_f$, $s_i := s_f$.

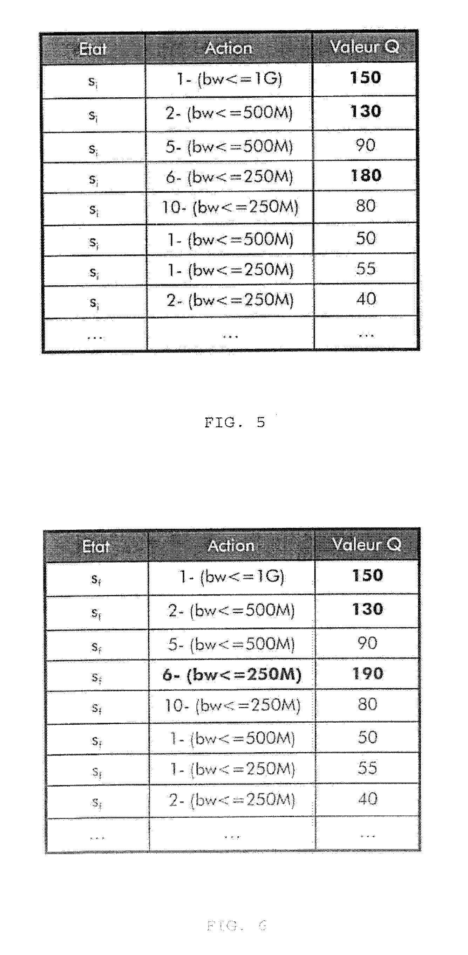

En reprenant l'exemple, et en appliquant l'algorithme précédent, la figure 5 illustre un tableau figurant la fonction $Q^\pi$ a l'état initial $s_i$. En supposant une requête r pour une liaison à 250M, différentes chaînes candidates sont possibles. Cependant la chaîne 6, soit la chaîne SE12-SE42-SE32 (ligne 4 du tableau fig. 5 et ligne 6 du tableau fig. 4) présente, avec une valeur 180, la plus grande valeur de $Q^\pi$ . Cette chaîne/action est par conséquent retenue. L'action correspondante est appliquée. La ligne 4 du tableau fig. 5 est réévaluée selon la formule d'apprentissage. Soit en prenant $\alpha=0,5$ et $\gamma=0,8$, le revenu p de la chaîne 6 étant égal à 40 : 180+0,5*[40+0,8*200-180], soit une nouvelle valeur égale à 190. Le tableau de $Q^\pi$ st remis à jour, comme illustré à la figure 6, pour l'état final $s_f$. Cet état final devient à l'étape suivante le nouvel état initial $s_i$.

La fonction $F^\pi$ définit une politique $\pi$. Différentes politiques sont possibles selon l'approche, plus ou moins exploratoire, souhaitée. Il est aussi possible de changer de politique $\pi$ en cours de route.

Selon un premier mode de réalisation, la fonction $F^\pi$ est la fonction max, et l'action optimale $a_0$ est l'action qui maximise $F^\pi$ sur l'ensemble $A_r$ des actions satisfaisant aux contraintes de ladite requête r de service, soit pour laquelle:

$$Q^{\pi}(s_i, a_0) = \max_{a_k \in A_r}\left(Q^{\pi}(s_i, a_k)\right)$$

La politique ainsi définie est une politique de gain à court terme puisque l'on privilégie le gain/revenu immédiat. Cette politique est nommée avare ou greedy (greedy signifiant avare en anglais).

Il est encore possible de mettre en place des politiques plus exploratoires en ce qu'elles élargissent le spectre de recherche par une sélection stochastique de l'action $a_0$. Il est ainsi possible de déterminer $a_0$ avec une politique ε-avare, ou ε-greedy, qui basée sur un ε compris entre 0 et 1, par exemple 0,1, considère un $a_0$ qui maximise $Q^{\pi}$ n nombre de fois égal à ε et considère un $a_0$ aléatoire un nombre de fois égal à 1-ε. L'aléa ainsi introduit permet d'augmenter l'exploration de l'espace des solutions.

Alternativement, d'autres lois stochastiques telles que softmax, boltzmann, ou toute autre loi stochastique. peuvent être utilisées.

Comme indiqué précédemment, à l'initialisation, aucune expérience ne permet de peupler la fonction $Q^{\pi}$ d'évaluation. Un premier mode d'initialisation consiste à mettre à une valeur constante, par exemple zéro, toutes les valeurs de la fonction $Q^{\pi}$ 'évaluation. Au départ la fonction $Q^{\pi}$ est initialisée avec des valeurs quelconques, en l'absence de retour d'expérience.

Alternativement, si certains trajets sont préférés ou à éviter, ou si une connaissance a priori est disponible, l'initialisation peut comprendre une mise à une valeur initiale majorée de la fonction $Q^{\pi}$ d'évaluation pour certains couples (s,a) préférentiels. Cette valeur peut être encore être minorée pour des couples (s,a) à éviter. Ainsi selon une convention de signe, une valeur positive peut désigner un couple préférentiel, une valeur négative peut désigner un couple à éviter, tandis qu'une valeur nulle désigne un couple indifférent ou dont on ne sait rien encore.

Afin de décrire le problème dans la logique de l'apprentissage par renforcement, l'ensemble S comprend tous les états s possibles. Un état s est un ensemble de chaînes de contrats de service successifs et continus. Ainsi pour revenir à l'exemple, un état s comprend toutes les chaînes reliant toutes les paires (source, destination) possibles. Les chaînes de la figure 4 représentent un extrait d'un état s pour la paire (source, destination) = (i11, e31). L'ensemble S peut avantageusement être construit par énumération. Selon les informations éventuellement fournies par chacun des opérateurs 1-4, un état s peut tenir compte de la disponibilité de chacun des trajets.

Afin d'éviter que le cardinal de l'ensemble S ne devienne trop grand, par explosion combinatoire, il est avantageux de normaliser les requêtes en limitant à un nombre restreint le nombre de classes de services. Ceci se fart en considérant des intervalles de caractéristiques techniques communes. Ainsi, pour la bande passante, la combinatoire de l'espace S relativement à quatre classes (0-25M, 250-500M, 500-750M et 750M-1G) peut être réduite d'un facteur 2 en conaidérant une définition à deux classes de bande passante (0-500M et 500M-1G). Ceci nécessite une harmonisation de ces classes entres les opérateurs.

Toujours dans la logique de l'apprentissage par renforcement, l'ensemble A comprend toutes les actions a possibles. Une action a est une sélection d'une chaîne particulière de contrats de service. Une action a peut ainsi être assimilée à une chaîne.

Il est possible de déterminer pour une requête r, un sous ensemble $A_r$ de l'ensemble A, contenant uniquement les actions a qui satisfont à ladite requête, soit les actions a dont la chaîne associée relie la ou les sources et la ou les destinations de la requête r en respectant les spécifications techniques de qualité de service de la liaison de bout-en-bout.

La réalisation d'une action a réalise l'allocation d'une chaîne. Autrement dit, déclenche la réalisation des différents contrats avec les opérateurs 1-4 successifs. Il est ainsi possible pour une action a de calculer un revenu p produit par l'établissement de ladite chaîne. Le revenu p d'une action a dans un état s est déterminé par le revenu apporté par l'allocation de la chaîne de contrats de service associée à ladite action a depuis l'état s. Le revenu p d'une chaîne de contrat SEjk est la somme des revenus élémentaires p des différents contrats SEjk successifs.

Le coût/revenu d'un contrat est le plus souvent indépendant de l'état s. Un opérateur 1-4 proposant un contrat à prix constant pour chaque type de liaison, le coût augmentant typiquement avec la bande passante offerte et la durée requise. Cependant, si l'on tient compte de la disponibilité, il est possible de considérer un opérateur dont les coûts varient en fonction de l'occupation de son réseau.

Dans la formule d'apprentissage recalculant la fonction d'évaluation $Q^{\pi}$ apparaissent deux paramètres : un taux de changement ou d'apprentissage α et un taux d'actualisation, d'intérêt ou d'amortissement γ. Ces deux paramètres sont avantageusement compris entre 0 et 1.

Le taux de changement α ut être constant. Cependant, afin de garantir la convergence de l'apprentissage, qui a été démontrée théoriquement, il est préférable que le taux de changement α soit dégressif jusqu'à zéro depuis une valeur initiale. Cette décroissance peut être obtenue par exemple par un recalcul de α à chaque itération. Il peut pour cela être appliqué une loi de décroissance quelconque (linéaire, quadratique, exponentielle, ...). La décroissance peut encore être fonction d'une mesure δ de distance entre les valeurs $Q^{\pi}$ à deux instants de temps différents, indicative de l'évolution de cette fonction $Q^{\pi}$. Il convient de fixer une valeur initiale de $\alpha$ avantageusement comprise entre 0 et 1.

Un compromis est à trouver entre une valeur élevée garantissant une rapide évolution des valeurs de la fonction $Q^{\pi}$ d'évaluation au risque de ne pas converger et une valeur faible où l'évolution est très ralentie. Lorsque $\alpha$ tend vers zéro, les valeurs de la fonction $Q^{\pi}$ n'évoluent plus. Une valeur constante ou initiale du taux de changement $\alpha$ égale à 0,5 permet d'obtenir des résultats satisfaisants.

Il peut être utilisé une seule valeur de $\alpha$ pour tous les calculs. Selon un mode de réalisation alternatif il peut aussi être utilisé un taux de changement $\alpha$ indépendant pour chaque paire (s,a).

De manière analogue le taux d'actualisation $\gamma$ est un compromis. Le taux d'actualisation $\gamma$ est avantageusement compris entre 0 et 1. Une valeur du taux d'actualisation $\gamma$ de 0,8 permet d'obtenir des résultats satisfaisants. Le taux d'actualisation représente l'importance accordée aux gains futurs. Un taux $\gamma$ proche de 1 favorise des objectifs à long termes, tandis qu'un taux $\gamma$ proche de 0 favorise des objectifs à court terme.

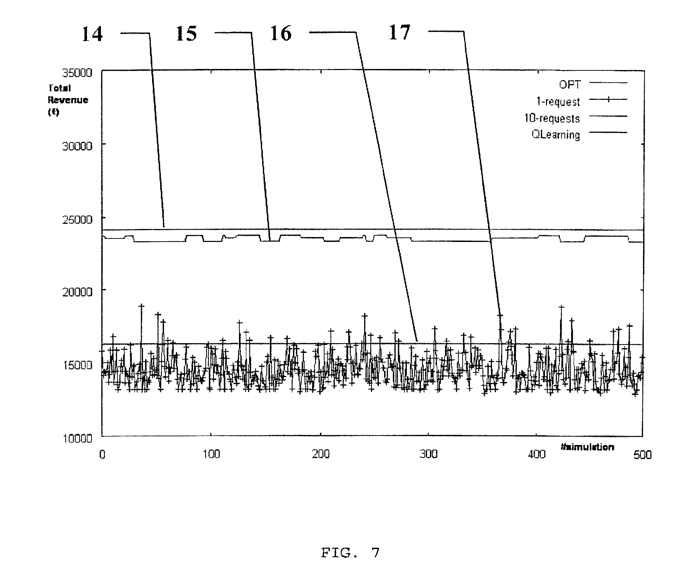

En se reportant à la figure 7 sont présentés des résultats comparés obtenus par différentes méthodes. Dans un diagramme figurant le revenu p en fonction du temps/du nombre d'itérations, le graphique figure plusieurs courbes. La courbe 14 figure la valeur optimale théorique du revenu global p. La courbe 15 représente le revenu p obtenu par le procédé décrit ci-dessus. La courbe 17 représente le revent p obtenu selon une méthode où le revenu p est optimisé à court terme, requête par requête. La courbe 16 représente le revenu p obtenu selon une méthode où le revenu est optimisé pour un ensemble de dix requêtes. Il apparaît que la courbe 15 approche sensiblement de l'optimum théorique et à tout le moins offre une performance supérieure d'un facteur 2 à celle de la méthode par dix requêtes qui constitue elle-même une méthode avantageuse par rapport à l'optimisation requête par requête.

**Revendications**

1. Procédé, dans un environnement de réseaux interconnectés d'opérateurs (1-4) de communication, de sélection et de négociation, en réponse à une requête de service entre une ou plusieurs sources (i11) et une ou plusieurs destinations (e31) selon des spécifications de qualité de service, d'une chaîne optimisée de contrats de service (SEjk) successifs et continus, établis chacun avec un opérateur (1-4), de manière à relier la ou lesdites sources (i11) avec la ou lesdites destinations (e31) par une liaison garantissant lesdites spécifications, *caractérisé en ce qu'*il comporte les étapes suivantes :

   - récupération et stockage dans une base de données (11) d'une pluralité de contrats de service par un programme tiers (9) assurant l'interface entre lesdits réseaux via des couches d'interface respectives (5-8) desdits réseaux, chaque contrat de service comprenant des paramètres techniques du service comportant au moins un point d'entrée ($i_{jk}$) et un point de sortie ($e_{jk}$) du réseau correspondant, le débit ou bande passante (bw) et le revenu spécifique (p) du contrat de service l'opérateur;
   - sur réception de ladite requête de service, établissement par ledit programme tiers (9) d'un ensemble de chaînes possibles de contrats de service parmi ladite pluralité de contrats de service stockée en fonction desdites spécifications, et sélection dans ledit ensemble de ladite chaîne optimisée en utilisant une technique d'optimisation globale du revenu de service comportant un apprentissage par renforcement adapté à la sélection d'une chaîne de contrats de service successifs et continus.

2. Procédé selon la revendication 1, où ladite technique d'optimisation utilise un module de type Q-learning.

3. Procédé selon la revendication 1 ou 2, où ledit apprentissage par renforcement comprend les étapes suivantes :

   - initialisation d'une fonction d'évaluation $Q^{\pi}$, fonction réelle d'une variable s décrivant l'ensemble S des états de l'environnement de communication et d'une variable a décrivant l'ensemble A des actions de changement d'état possibles,

      - itération à chaque réception d'une requête r de service des étapes suivantes :

         - depuis un état initial $s_i$,
         - choix d'une action $a_0$, dans l'ensemble $A_r$ des actions satisfaisant aux contraintes de ladite requête r de service, fonction de la fonction d'évaluation $Q^{\pi}$, soit pour laquelle :

$$Q^{\pi}(s_i, a_0) = \underset{a_k \in A_r}{F^{\pi}}\left(Q^{\pi}(s_i, a_k)\right),$$

où $F^{\pi}$ est une fonction réelle,

- application de ladite action $a_0$,
- détermination d'un revenu p associé à ladite action $a_0$ et à l'état initial $s_i$,
- détermination d'un état final $s_f$ résultant de l'application de ladite action $a_0$,
- réévaluation de la fonction $Q^{\pi}$ pour l'état initial $s_i$ et l'action déterminée $a_0$, selon la formule d'apprentissage ;

$$Q^{\pi}(s_i, a_0) := Q^{\pi}(s_i, a_0) + \alpha \left[ p + \gamma \max_{a_k \in A(s_f)} \left( Q^{\pi}(s_f, a_k) \right) - Q^{\pi}(s_i, a_0) \right],$$

où
$\alpha$ est un taux de changement,
$\gamma$ est un taux d'actualisation,
$A(s_f)$ est l'ensemble des actions $a_k$ possibles dans
l'état final $s_f$,

- remplacement de l'état initial $s_i$ par l'état final $s_f$, $s_i := s_f$.

4. Procédé selon la revendication 3, où la fonction $F^{\pi}$ est la fonction max.

5. Procédé selon la revendication 3, où la fonction $F^{\pi}$ est une fonction d'exploration stochastique selon la politique $\pi$, ladite politique étant choisie parmi : $\varepsilon$-greedy, softmax, boltzmann, ou toute autre politique stochastique.

6. Procédé selon l'une quelconque des revendications 3 à 5, où l'initialisation comprend la mise à zéro de toutes les valeurs de la fonction $Q^{\pi}$ d'évaluation.

7. Procédé selon l'une quelconque des revendications 3 à 5, où l'initialisation comprend encore la mise à une valeur initiale non nulle de la fonction $Q^{\pi}$ d'évaluation pour une pluralité de couples (s,a).

8. Procédé selon l'une quelconque des revendications 3 à 7, où un état s de l'ensemble S est un ensemble de chaînes de contrats de service successifs et continus.

9. Procédé selon l'une quelconque des revendications 3 à 8, où une action a de l'ensemble A est une sélection d'une chaîne de contrats de service successifs et continus.

10. Procédé selon l'une quelconque des revendications 3 à 9, où le revenu p d'une action a dans un état s est déterminé par le revenu apporté par l'allocation de la chaîne de contrats de service associée à ladite action a depuis l'état s.

11. Procédé selon l'une quelconque des revendications 3 à 10, où le taux de changement $\alpha$ est dégressif jusqu'à zéro depuis une valeur initiale comprise entre 0 et 1.

12. Procédé selon la revendication 11, où la valeur initiale du taux de changement $\alpha$ est égale à 0,5.

13. Procédé selon la revendication 11 ou 12, où un taux de changement $\alpha$ est associé indépendamment à chaque paire (s,a).

14. Procédé selon l'une quelconque des revendications 3 à 13. où le taux d'actualisation $\gamma$ est compris entre 0 et 1.

15. Procédé selon la revendication 14, où le taux d'actualisation $\gamma$ est égal à 0,8.

FIG. 1

FIG. 2

**SE11** bw=1G, p=30
**SE12** bw=500M, p=10

**i21**

**SE21** bw=250M, p=5

**i31**

**SE31** bw=1G, p=20
**SE32** bw=250M, p=10

**i11**

**SE21** bw=250M, p=5

**i32**

**e31**

**SE31** bw=1G, p=20
**SE32** bw=250M, p=10

**SE11** bw=1G, p=30
**SE12** bw=500M, p=10

**i41**

**SE41** bw=1G, p=30
**SE42** bw=500M, p=20

FIG. 3

**SE11 – SE41 – SE31**, bw = 1G,    p = 80
**SE11 – SE41 – SE32**, bw = 250M, p = 70
**SE11 – SE42 – SE31**, bw = 500M, p = 70
**SE11 – SE42 – SE32**, bw = 250M, p = 60
**SE12 – SE42 – SE31**, bw = 500M, p = 50
**SE12 – SE42 – SE32**, bw = 250M, p = 40
**SE11 – SE21 – SE31**, bw = 250M, p = 55
**SE11 – SE21 – SE32**, bw = 250M, p = 45
**SE12 – SE21 – SE31**, bw = 250M, p = 35
**SE12 – SE21 – SE32**, bw = 250M, p = 25

FIG. 4

| Etat | Action | Valeur Q |
|:---:|:---:|:---:|
| $s_i$ | 1- (bw<=1G) | **150** |
| $s_i$ | 2- (bw<=500M) | **130** |
| $s_i$ | 5- (bw<=500M) | 90 |
| $s_i$ | 6- (bw<=250M) | **180** |
| $s_i$ | 10- (bw<=250M) | 80 |
| $s_i$ | 1- (bw<=500M) | 50 |
| $s_i$ | 1- (bw<=250M) | 55 |
| $s_j$ | 2- (bw<=250M) | 40 |
| ... | ... | ... |

FIG. 5

| Etat | Action | Valeur Q |
|:---:|:---:|:---:|
| $s_f$ | 1- (bw<=1G) | **150** |
| $s_f$ | 2- (bw<=500M) | **130** |
| $s_f$ | 5- (bw<=500M) | 90 |
| $s_f$ | **6- (bw<=250M)** | **190** |
| $s_f$ | 10- (bw<=250M) | 80 |
| $s_f$ | 1- (bw<=500M) | 50 |
| $s_f$ | 1- (bw<=250M) | 55 |
| $s_f$ | 2- (bw<=250M) | 40 |
| ... | ... | ... |

FIG. 6

FIG. 7

Europäisches
Patentamt

European
Patent Office

Office européen
des brevets

# RAPPORT DE RECHERCHE EUROPEENNE

Numéro de la demande

EP 09 18 0291

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | DIRK HETZER: "Operation research techniques of QORE system for intern-domain capacity engineering" INTERNET ARTICLE, [Online] 22 septembre 2003 (2003-09-22), pages 1-16, XP002551714 Salzburg Extrait de l'Internet: URL:http://www.ist-intermon.org/workshop/papers/08_02_qore_last.pdf> [extrait le 2009-10-21] | 1 | INV. H04L12/24 H04L12/56 |
| Y | * abrégé * * chapitres 1, 2, 3, 3.1, 3.2, 3.3, 4 * ----- | 2-15 | |
| Y | DIRK HETZER, ILKA MILOUCHEWA: "Presentation: Adaptable bandwidth planning for enhanced QoS support in user-centric broadband architectures" , [Online] 3 mai 2006 (2006-05-03), pages 1-19, XP002551715 Budapest Extrait de l'Internet: URL:http://wtc2006.hu/present/1568973786_X_Hetzer.ppt> [extrait le 2009-10-21] | 2-15 | |
| A | * pages 1-3 * * pages 7-19 * ----- | 1 | DOMAINES TECHNIQUES RECHERCHES (IPC)<br><br>H04L<br>H04W |
| A | DIRK HETZER ET AL: "Resource Reservation in Advance for Content On-demand Services" TELECOMMUNICATIONS NETWORK STRATEGY AND PLANNING SYMPOSIUM, 2006. NETW ORKS 2006. 12TH INTERNATIONAL, IEEE, PI, 1 novembre 2006 (2006-11-01), pages 1-6, XP031014835 ISBN: 978-1-4244-0952-5 * le document en entier * ----- | 1-15 | |

-/--

Le présent rapport a été établi pour toutes les revendications

| Lieu de la recherche | Date d'achèvement de la recherche | Examinateur |
|---|---|---|
| Berlin | 20 mai 2010 | Böhmert, Jörg |

CATEGORIE DES DOCUMENTS CITES

X : particulièrement pertinent à lui seul
Y : particulièrement pertinent en combinaison avec un
　　autre document de la même catégorie
A : arrière-plan technologique
O : divulgation non-écrite
P : document intercalaire

T : théorie ou principe à la base de l'invention
E : document de brevet antérieur, mais publié à la
　　date de dépôt ou après cette date
D : cité dans la demande
L : cité pour d'autres raisons

& : membre de la même famille, document correspondant

EPO FORM 1503 03.82 (P04C02)

Europäisches
Patentamt

European
Patent Office

Office européen
des brevets

**RAPPORT DE RECHERCHE EUROPEENNE**

Numéro de la demande

EP 09 18 0291

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | YONG LIU ET AL: "Maps: a localized and distributed adaptive path selection scheme in mpls networks"<br>HIGH PERFORMANCE SWITCHING AND ROUTING, 2003, HPSR. WORKSHOP ON JUNE 24-27, 2003, PISCATAWAY, NJ, USA,IEEE,<br>24 juin 2003 (2003-06-24), pages 209-213, XP010654669<br>ISBN: 978-0-7803-7710-3<br>* le document en entier *<br>----- | 1-15 | |
| A | "Reinforcement Learning: An Introduction"<br>IEEE TRANSACTIONS ON NEURAL NETWORKS, IEEE SERVICE CENTER, PISCATAWAY, NJ, US,<br>vol. 16, no. 1,<br>1 janvier 2005 (2005-01-01), pages 285-286, XP011126010<br>ISSN: 1045-9227<br>* le document en entier *<br>----- | 2-15 | |

DOMAINES TECHNIQUES
RECHERCHES (IPC)

Le présent rapport a été établi pour toutes les revendications

| Lieu de la recherche | Date d'achèvement de la recherche | Examinateur |
|---|---|---|
| Berlin | 20 mai 2010 | Böhmert, Jörg |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 
& : membre de la même famille, document correspondant

EPO FORM 1503 03.82 (P04C02)

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **N. Djarallah ; H. Pouyllau.** Algorithms for SLA Composition to Provide Inter-Domain Services. *IEEE International Symposium on Integrated Network Management (IM),* 2009

- **Howarth, M. P. ; Boucadair, M. ; Flegkas, P. ; Wang, N. ; Pavlou, G. ; Morand, P. ; Coadic, T. ; Griffin, D. ; Asgari, A. ; Georgatsos, P.** End-to-end quality of service provisioning through inter-provider traffic engineering. *Computer Communications,* 2006, vol. 29, 683-702